# EUROPEAN PATENT SPECIFICATION

(11) **EP 2 410 863 B1**
(45) Date of publication and mention of the grant of the patent: **06.02.2013**
(21) Application number: 10714220.0
(22) Date of filing: 24.03.2010
(51) Int. Cl.: A21C 9/04, A23L 1/16

(54) **MODULAR UNIT FOR AUTOMATIC PACKAGING OF FOOD PRODUCTS TO BE PACKAGED IN TRAYS**
MODULEINHEIT FÜR DIE AUTOMATISCHE VERPACKUNG VON AUF PALETTEN ZU VERPACKENDEN NAHRUNGSMITTELN
UNITÉ MODULAIRE POUR EMBALLAGE AUTOMATIQUE DE PRODUITS ALIMENTAIRES DEVANT ÊTRE EMBALLÉS SUR DES PLATEAUX

(43) Date of publication of application: 01.02.2012
(73) Proprietor: Storci S.p.a., 43044 Collecchio (IT)
(72) Inventor: RICCO', Massimiliano, I-43044 Collecchio (Parma) (IT)
(74) Representative: Benelli, Cristian
(86) International application number: PCT/EP2010/053822
(87) International publication number: WO 2010/108946

(56) References cited:
- EP-A- 0 830 817
- EP-A- 1 177 722
- BE-A1- 759 635
- JP-A- 7 231 746
- US-A- 5 456 931

## Description

### FIELD OF THE INVENTION

The present invention addresses the field of systems for packaging food products, particularly slices of meat, sliced salami or ham, rolled ham, fresh, precooked or dry pasta.

The invention relates to a modular unit for automatic packaging of the above mentioned food products to be packaged in trays which uses one or more pick-up heads for picking up and transferring the product from a feeding belt. The trays to be filled circulate multiple times on a dual-belt system having adjacent linear conveyors and pushing devices for the reversing function, for receiving multiple deposits of product therein. The pick-up head picks up and deposits the product using vacuum generating means; an optical reader checks the position of the product on the feeding belt.

### BACKGROUND OF THE INVENTION

European Patent EP1177722 discloses a food packaging machine comprising a feeder for picking up a plurality of product lines and feeding each of said lines to respective product conveyors and means for distributing the products of each line into containers fed onto a conveyor device wherein said product conveyors extend one above the other in parallel relation and have different lengths. Furthermore, each conveyor has a delivery end at a distribution station for depositing the product. Pasta continuously reaches the production line in the form of a pasta strip and falls by gravity from the delivery end to the distribution station; here a cutting device cuts the pasta strip and creates a number of sheets that are received by an (inclined) pick-up and release device, which is adapted to release them into the underlying container.

Drawbacks of this technique include poor productivity, with a high scrap rate, due to the pasta sheet being curled when it lies on the pick-up and release device, wherefore the applicant suggested the provision of an ejecting device. Another drawback is that the pasta strip is sticky, which makes it unstable as it moves and falls by gravity into the distribution station.

U.S. Patent 5,509,350 discloses an apparatus for preparing a layered food product, which comprises two conveyor belts, wherein a first conveyor belt is placed below a second conveyor belt, and has a first guide for orienting a plurality of strips of material of a food product, so that one strip is guided on the first conveyor belt and the other on the second conveyor belt.

Here, the same drawbacks as above occur: poor productivity and instability as pasta is moved and dropped by gravity into the distribution station.

An Italian Patent Application ITPR2006A000068 discloses a machine for packaging food products derived from precooked pasta sheet (in either plain or formed and stuffed pieces), wherein a tray conveyor is placed parallel to a feeding belt for precooked sheet pieces and one or more pick-up heads (7) pick up and transfer said pieces from the belt to the trays on the conveyor, thereby effecting the desired distribution. The pick-up heads (7) slide freely along a counter-frame (6), thereby tracking the feeding belt (2) for the pre-cut pasta. The pieces are arranged on the feeding belt like in a NxM matrix, thereby defining the layers to be picked up and different stratigraphies/arrangements of the finished product: according to the desired format/arrangement, each pick-up head picks up a submatrix nxm of units from the belt and deposits them into the trays in the desired arrangement.

This prior art suffers from the drawbacks of poor versatility of the machine, whose operation depends on a well-defined matrix arrangement of the pasta feeding system and poor productivity relative to the number of pick-up heads.

### DISCLOSURE AND ADVANTAGES OF THE INVENTION

The object of the present invention is to provide a robotic system for packaging pasta to be packaged into trays, that can eliminate the above drawbacks.

This is achieved by a robotic system having a vision system/device operating during handling of pasta products; thus, the pasta need not be in a predetermined position.

The advantages thereof include:
- the ability of picking up pieces/layers in wrong arrangements due to wrong cuts or steps, which cannot be achieved by the other systems;
- a quality control on the incoming products, allowing to discard products with defects.

Also, the robotic system uses a pick-up head with no suction cups thereon, to minimize the contact area, and hence contamination; the head picks up the incoming product and deposits it into its tray; also, said pick-up head is composed of vacuum generating elements operating by Venturi effect, which can be individually regulated both in the flow rate and degree of vacuum (by regulating an on/off valve for compressed air), to obtain a flow rate that allows the edge to fit the surface of the product even without adhering thereagainst and a degree of vacuum that does not suck the product in, even when it is very thin.

The feeding belt has a plurality of holes for an improved pick-up action, which also prevent it from being caught by the head.

Another advantage is that the present integrated system is comprised of modular automatic pasta packaging workstations, and is thus versatile and adapted to be combined with additional modular units; with a single feeding belt and a novel system having two tray circulating belts, the productivity and the number of deposited layers is independent of the number of robots being used, which solution reduces the number of required robots and dosing units:
For example: assuming a lasagna throughput of 1200 trays/hour with 5 layers (layers of pasta for each package) and with meat sauce and bechamel sauce being dosed at each layer, then:
   - The classical linear solution would require five robots and ten dosers, whereas
   - With the solution of the present invention, two modular units and four dosers are only required

As mentioned above, this is possible due to a novel dual belt system for the trays to be filled, which does not have a closed loop operation but includes two adjacent linear conveyors and pushing devices for the reversing action, thereby allowing rotary and continuous forward motion of the trays to be filled until they are completed.

These objects and advantages are achieved by the modular unit for automatic packaging of food products derived from cooked pasta sheet, in either plain or formed and stuffed pieces, according to the present invention, which is characterized as set forth in the annexed claims.

### BRIEF DESCRIPTION OF THE FIGURES

This and other features will be more apparent from the following description of a few embodiments, which are shown by way of example and without limitation in the accompanying drawings.
- Figure 1: a plan view of a modular unit for packaging fresh pasta to be packaged in trays according to the invention
- Figure 2: an elevational view of the machine of Figure 2,
- Figure 3: still the machine of figure 1 with the tray conveying carousel oriented orthogonal to the pasta feeding belt,
- Figure 4: an embodiment with multiple modular units connected in series for increased hourly throughput,
- Figure 5: an embodiment of the pick-up head of the robotic system

### DESCRIPTION OF THE INVENTION

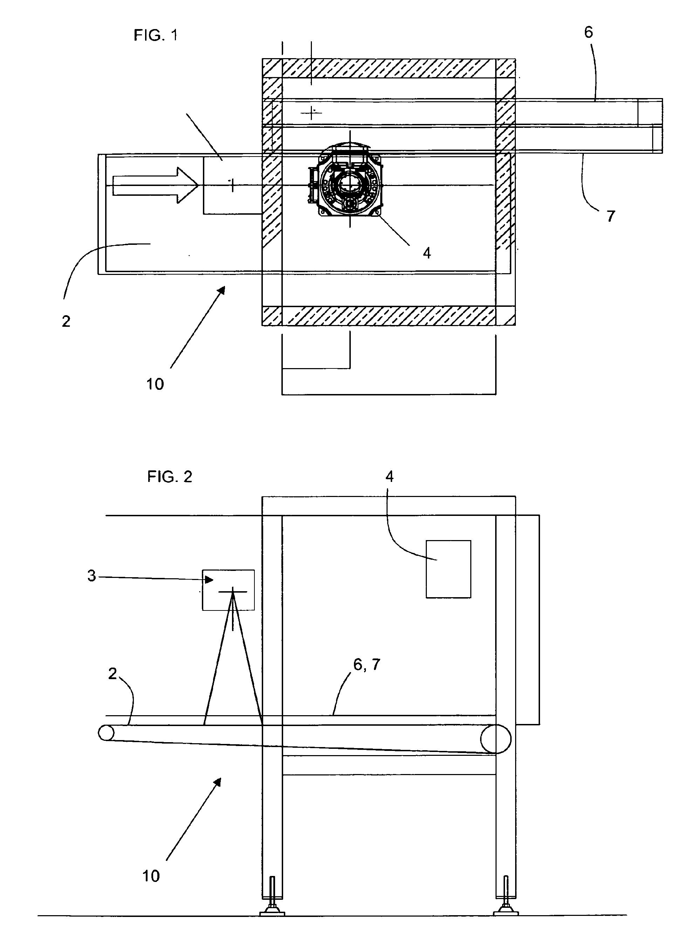

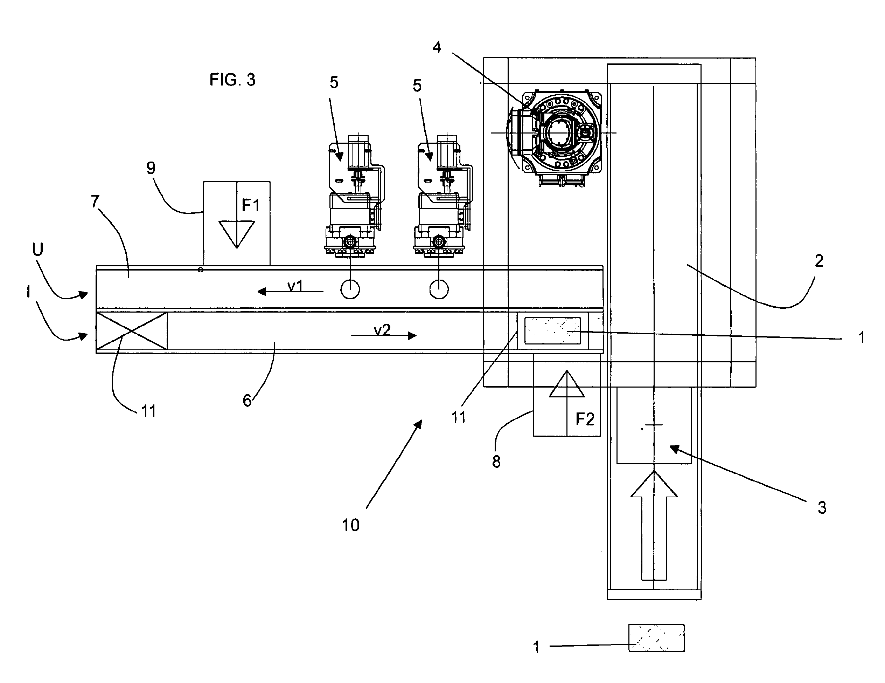

Referring particularly to Figures 1, 2, 3 and 4, numeral 10 generally designates a modular unit for packaging food products 1, particularly slices of meat, sliced salami or ham, rolled ham, fresh, precooked or dry pasta, to be packaged in trays 11.

The trays 11 are open-top containers that can be used to accommodate multiple layers of product 1 (pasta, pasta sheets, slices, etc.) and optionally other food/seasoning ingredients.

The unit 1 consists of at least one pick up head 4 for picking up/taking the product 1 that comes from an appropriate feeding conveyor 2, i.e. a belt having a plurality of holes, in the direction of arrow F.

This pick-up head 4 comprises the use of vacuum generating elements operating by Venturi effect, which can be individually regulated to obtain a flow rate that allows the edge to fit the surface of the product 1 even without perfectly adhering thereagainst and a degree of vacuum that does not suck the product in, even when it is very thin. As a result, a slight contact is sufficient to transfer the product into the tray 11, which is conveyed by a dual-belt system that simulates a closed loop due to the presence of pushing devices that transfer the trays from one belt to the other.

Namely, the dual-belt system comprises a pair of adjacent conveyors 6 and 7 having opposite feeding directions V1 and V2 and pushing devices 8 and 9 which push the tray 11 circulating on one conveyor onto the conveyor 6 or 7 next to it: this reversing action creates a somewhat rotary, continuous motion until all the layers are completed and the tray is filled. Each pushing device 8, 9 is operated when it has the tray 11 before it; the pushing device 8 operates in the direction F2 and pushes the tray 11 from the conveyor 6 to the conveyor 7, whereas the pushing device 9 operates in the direction F1 and pushes the tray from the conveyor 7 to the conveyor 6.

For the trays 11 to be introduced into the system, one of the conveyors, e.g. the conveyor 6 in Figure 2, has an inlet I: a tray dispenser allows empty trays to enter the carousel system.

For the trays 11 to exit from the system, the adjacent conveyor, i.e. the conveyor 7 in Figure 2, has an outlet U that can be opened as needed, e.g. by a movable strap, to allow the trays 11 to exit once they have been filled as desired (with the required number of pasta layers and seasoning, if any).

One or more dosers 5 along the dual-belt system interpose an appropriate seasoning layer (meat sauce, bechamel sauce, vegetables, other food, etc.) between layers of product 1.

The system allows the trays to be circulated as many times as required, to perform multiple deposits therein (multilayer arrangement) while minimizing the number of handling and dosing units 5.

The pick-up means 4 will pick-up the product 1 coming in on the feeding belt 2: an artificial vision system 3 is provided upstream from such pick-up station to check the position of the pasta 1 to be picked up; such acquired position is transferred to the means 4 that will be appropriately positioned above the belt 2.

The pick-up means 4 may be mounted to displacement units that are free to slide along Cartesian directions or on one or more mechanical anthropomorphic arms.

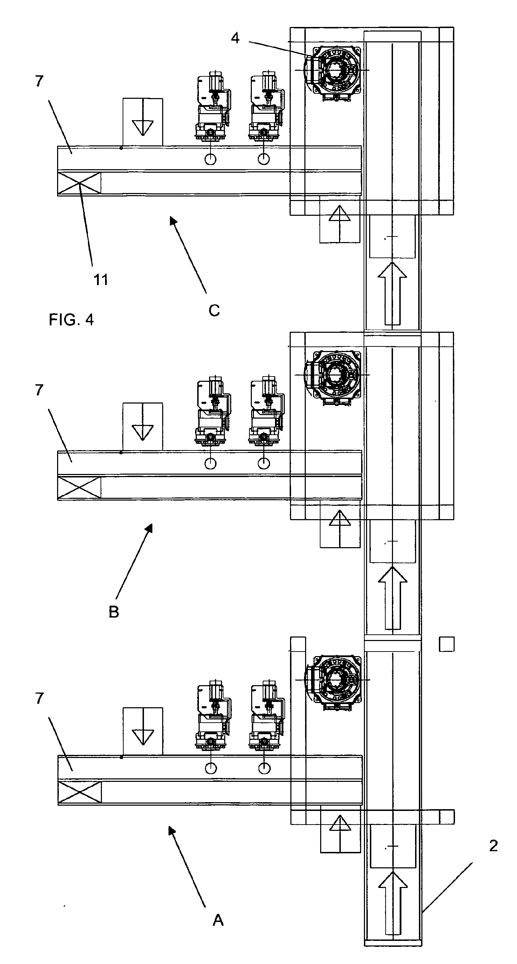

Particularly referring to Figure 4, an embodiment is shown, in which multiple modular units 10 operate together in series to increase the hourly throughput. The conveyor belt 2 is common to the modular units 10 and passes through them; the vision system 3 of each unit will identify and communicate, as mentioned above, the accurate position of the pasta 1 to be picked up on the belt 2; thus each line (A, B, C in Figure 4) may handle different product solutions at the same time, and each may use a different number of layers of product 1 in the tray 11 (different loops of the dual belt system) and possibly different seasonings (different dosers 5).

Still concerning the configuration of Figure 4, i.e. the embodiments with multiple units 10, there may be independent vision systems 3 for each unit 10, or a single vision system 3 in the first unit which later controls the pick up of the incoming products 1, according to a predetermined proportion.

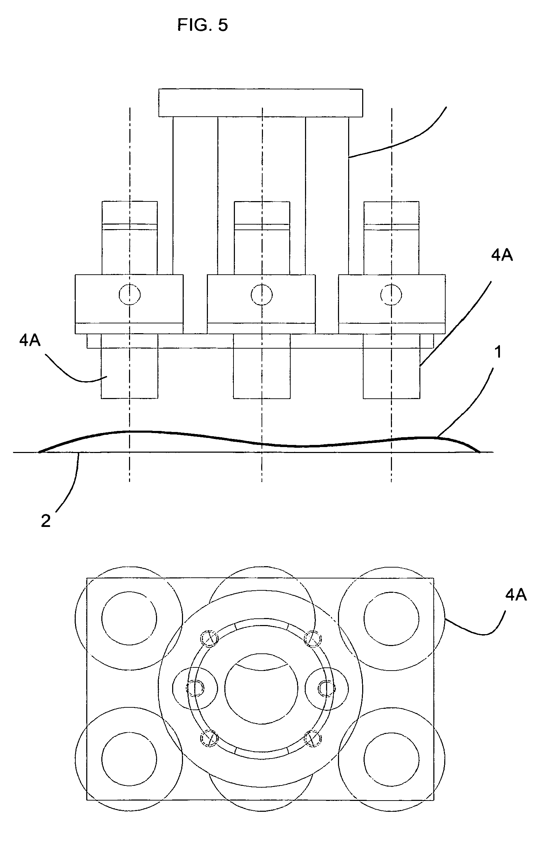

Particularly referring to Figure 5, there is shown an embodiment of the pick-up head 4 of the robotic system, which is composed of vacuum generating elements 4A operating by Venturi effect, which can be individually regulated both in the flow rate and degree of vacuum (by regulating an on/off valve for compressed air conveyed through an appropriate duct 4B), to obtain a flow rate that allows the edge to fit the surface of the product 1 even without adhering thereagainst and a degree of vacuum that does not suck the product in, even when it is very thin.

The suction effect may be obtained by 2 different effects: vacuum generation (typically using a vacuum pump) or air speed (typically using a blower); vacuum is particularly suitable with flat and smooth surfaces and with elements such as soft suction cups perfectly adhering thereto.

However, if the surface of the product 1 is not flat and has corrugations, no adhesion would be obtained between the pick-up element and the product 1.

To obviate this drawback, the head 4 uses air flow which generates a suction effect, even in case of air leakage.

Since this involves the risk that the air flow might suck in the product, the element 4A is both a vacuum generator and an exhauster, thereby addressing both problems to be addressed; thus, this system can attract the product 1 by air acceleration (as appropriate in case of leakages due a non perfectly homogeneous surface of the product 1) without sucking in or damaging the product, such as cooked/precooked pasta sheets, that are thin and delicate.

This arrangement can also reduce the contact surface (and hence contamination) unlike classical suction cup arrangements.

## Claims

1. A modular unit (10) for the automatic packaging of food products (1) to be packaged within suitable tray (11), said unit (10) being provided with at least
one feed belt (2) for the products (1) to be packaged,
one or more pick-up heads (4) for picking and handling the pasta (1) from the conveyor (2) and placing the latter within the tray (11)
**characterized in that** it provides moving the tray (11) on a two-belt system with line conveyors (6, 7) placed side by side and thrust devices (8, 9) for the inversion of motion; the tray (11) is moved for the number of times as required to carry out several depositions of pasta and/or seasoning therein.

2. The unit (10) according to claim 1, **characterized in that** said conveyors (6, 7) are placed side by side and provided with opposite forward speeds (V1, V2) and said thrust devices (8, 9) cause the moving tray (11) to be displaced to the adjacent conveyor.

3. The unit (10) according to claim 1, **characterized in that** said action of picking-up the pasta (1) is carried out prior to the detection of the position of said pasta (1) on the belt (2) by an artificial vision system (3) that identifies the position thereof and communicates the latter to the pick-up means (4).

4. The unit (10) according to claim 1, **characterized in that** said pick-up head (4) comprises a plurality of individually adjustable Venturi vacuum-generating elements, which generate both capacity and vacuum grade, which can be adjusted by acting on a compressed air shut-off valve, to have a capacity that allows the edge to fit the product surface even without being perfectly adherent thereto and a vacuum grade that does not suck even the thinnest product.

5. The unit (10) according to claim 1, **characterized in that** said feed belt (2) is provided with a plurality of holes to prevent the latter from being engaged by the head when vacuum is being established.

## Patentansprüche

1. Modulare Einheit (10) zur automatischen Verpackung von in einem geeigneten Tablett (11) zu verpackenden Nahrungsmitteln (1), wobei die besagte Einheit (10)
mit mindestens einem Zuführband (2) für die zu verpackenden Produkte (1) ausgestattet ist,
mit mindestens einem oder mehreren Probenahme-Köpfen (4) ausgestattet ist, zum Abholen und Bewegen der Teigwaren (1) aus dem Förderer (2) und diese ins Innere des Tabletts (11) zu platzieren,
**dadurch gekennzeichnet, dass** sie das Tablett (11) auf einem System mit zwei Gurten mit Online nebeneinander gelegten Förderern (6, 7) bewegt, und mit Schubvorrichtungen (8, 9) zum Umkehren der Bewegung; wobei das Tablett (11) für die erforderliche Anzahl von Malen bewegt wird, um eine Vielzahl von Ablagerungen von Teigwaren und/oder Speisewürzen auf dieser Ebene auszuführen.

2. Einheit (1) nach Anspruch 1, **dadurch gekennzeichnet, dass** die besagten Förderbänder (6, 7) nebeneinander gelegt mit entgegengesetzter Vorwärtsgeschwindigkeiten (V1, V2) vorgesehen sind, und dass die besagten Schubvorrichtungen (8, 9) das bewegliche Tablett (11) auf das benachbarte Förderband bewegen.

3. Einheit (20) nach Anspruch 1, **dadurch gekennzeichnet, dass** die Aktion des Aufnehmens der Teigwaren (1) vor der Erfassung der Lage dieser Teigwaren (1) auf dem Riemen (2) durchgeführt wird, indem ein künstliches Vision-System (3) ihre Stellung identifiziert und diese den Aufnehme-Mittel mitteilt.

4. Einheit (10) nach Anspruch 1, **dadurch gekennzeichnet, dass** der besagte Aufnahmekopf (4) eine Mehrheit von individuell einstellbaren Vakuum-erzeugenden Venturi-Elementen umfasst, die sowohl Leistung und Vakuum-Klasse erzeugen, und die durch Einwirkung auf ein Verschluss-Ventil von Druckluft verstellt werden können, um eine Kapazität zu erreichen, die den Rand erlaubt, sich mit der Oberfläche des Produkts zu verbinden, auch ohne eine perfekte Haftung an letztere zu haben, mit der ein Grad des Vakuums so eingestellt wird, dass es auch das dünnste Produkt nicht ansaugt.

5. Einheit (10) nach Anspruch 1, **dadurch gekennzeichnet, dass** das besagte Zuführband (2) mit einer Mehrheit von Bohrungen ausgestattet ist, um zu verhindern, dass es von dem Kopf in Eingriff gebracht wird, wenn Vakuum hergestellt wird.

## Revendications

1. Unité modulaire (10) pour l'emballage automatique de produits alimentaires (1) à emballer à l'intérieur d'un bac approprié, ladite unité (10) étant munie d'au moins
une courroie d'alimentation pour les produits (1) à emballer,
une ou plusieurs têtes de prélèvement (4) pour prélever et manipuler la pâte (1) du convoyeur (2) et pour placer celle-ci à l'intérieur du bac (11)
**caractérisée en ce qu'**elle cause le déplacement du bac (11) sur un système avec deux courroies avec des convoyeurs (6, 7) en ligne placés côte à côte et des dispositifs de poussée (8, 9) pour l'inversion du mouvement; le bac (11) étant déplacé pour le nombre de fois requis pour effectuer de nombreux dépôts de pâte et/ou condiments à l'intérieur.

2. Unité (10) selon la revendication 1, **caractérisée en ce que** lesdits convoyeurs (6, 7) sont placés côte à côte et présentent des vitesses avant opposées (V1, V2) e que lesdits dispositifs de poussée (8, 9) causent le mouvement du bac mobile (11) vers le convoyeur adjacent.

3. Unité (10) selon la revendication 1, caractérisée en ce ladite action de prélèvement de la pâte (1) est faite avant la détection de la position de ladite pâte (1) sur la courroie (2) par un système de vision artificiel (3) qui identifie la position de la même et communique celle-ci au moyens de prélèvement (4).

4. Unité (10) selon la revendication 1, caractérisée en ce la dite tête de prélèvement (4) comprend une pluralité d'éléments Venturi de génération de vide individuellement réglables, qui génèrent à la fois une capacité et un degré de vide, qui peuvent être réglés agissant sur une vanne de fermeture d'air comprimé, pour obtenir une capacité qui permet au bord de s'engager avec la face du produit, même sans être parfaitement adhérent à celle-ci, et un degré de vide qui n'aspire même le produit plus mince.

5. Unité (10) selon la revendication 1, **caractérisée en ce que** ladite courroie d'alimentation (2) est munie d'une pluralité de trous pour éviter que celui-ci soit engagé par la tête lorsqu'un vide est créé.
